# EUROPEAN PATENT SPECIFICATION

(11) **EP 1 932 676 B1**
(45) Date of publication and mention of the grant of the patent: **18.11.2009**
(21) Application number: 06126068.3
(22) Date of filing: 13.12.2006
(51) Int. Cl.: B41M 1/12, B42D 15/10

(54) **Laminated IC card with mirror effect surface portion**
Laminierte IC-Karte mit Spiegeleffektoberflächenanteil
Carte à puce stratifiée avec une portion en surface à effet de miroir

(43) Date of publication of application: 18.06.2008
(73) Proprietor: E-Kart Elektronik Kart Sistemleri Sanayi ve Ticaret A.S., 41480 Kocaeli (TR)
(72) Inventor: Ertus, Yavuz E-Kart Elektronik Kart Sist. San. ve Tic. A.S., 41480 Kocaeli (TR)
(74) Representative: Sevinç, Erkan

(56) References cited:
- EP-A2- 0 298 687
- WO-A-01/69521
- WO-A-03/074291
- DE-U1- 29 616 519
- US-A- 4 938 830

## Description

### Technical Field of the Invention

The invention relates to a transaction card such as a credit card and method of producing the same. More particularly, the present invention relates to a credit card having a specular surface characteristic, adapted to provide an improved mirror effect.

### Background of the Invention

It is an undeniable fact that credit cards and cards carrying information as to identity and other relevant financial particulars of card holders are widely used all over the world. Although cards issued by different organizations are primarily adapted to fulfill very similar tasks in principle, they are yet different in terms of their visual characteristics. In the country of the applicant, due to limited profit ranges in finance sector, card issuers generally intend to offer cards with distinctive visual characteristics to their customers, which let them differentiate their services and products and increase their market share in the highly competitive finance sector.

It is therefore not far wrong to say that in the eyes of card holders, credit cards such as those used in shopping including other cards specially issued for other purposes such as pre-paid cards, retail store cards, insurance cards, traveling cards, transit passes, tickets, personal identification cards etc. are all similar in functionality and only differentiate in their aesthetical features, such as for instance translucence, transparency, printed graphics etc. For instance US patent 5,608,203 discloses a credit card incorporating a magnifying lens.

To provide a credit card surface portion with a mirror and to enable said portion to show a mirror characteristic to the extent that it can actually be used as a real mirror requires solution of a set of problems. WO0169521 discloses a transaction card having an attractive foil face and showing a clear scratch resistant metallic surface characteristic. While the disclosure of WO0169521, addressing to the problem of lack of clarity by making use of metal containing foil layer, provides a clearer surface, the information carrier (IC) card therein is actually not aimed at exposing a mirror effect. The present invention, on the other hand, provides a clear surface to the extent which a mirror effect can be obtained.

### Objects of the Invention

The primary object of the present invention is to provide an IC card having a surface portion providing an improved mirror effect to the extent that it can actually be used as a mirror.

Another object of the present invention is to provide an IC card having front face visuals which does not require an extra transparent overlay for surface protection against scratching.

Another object of the present invention is to provide an IC card having front face visuals which per se have a transparent overlay for surface protection against scratching.

Another object of the present invention is to provide an IC card having front and rear face visuals with improved results in terms of color saturation.

Another object of the present invention is to provide an IC card comprising a plurality of layers made of different materials, which does not bend when subject to lamination process.

Another object of the present invention is to provide an opaque physical barrier between front and rear face visuals of the IC card in order for obstructing the passage of light and therefore ensuring clarity of the IC card front and rear faces.

### Summary of the Invention

The present invention proposes a mirror effect IC card and a method for producing the same. The IC card incorporates different layers, namely a foremost polycarbonate-based layer; on the back face of which firstly a mirror image of the desired design in the form of graphics, written information, pictorial illustrations and other indicia is printed by a conventional offset lithography process.

A clear PVC overlay to which magnetic tapes are already applied in a conventional manner is then bonded to another polycarbonate-based layer, on the back face of which desired ground color and other graphics are printed by respectively offset lithography and silk-screening processes. In between the two polycarbonate-based layers is provided a fourth opaque PVC layer. Mirror effect is obtained by way of using a solvent based ink on a foremost layer back face surface portion that was left blank.

### Brief Description of the Figures

Accompanying drawing is given solely for the purpose of exemplifying an IC card having a surface portion providing an improved mirror effect whose advantages over prior art were outlined above and will be explained in detail hereinafter:

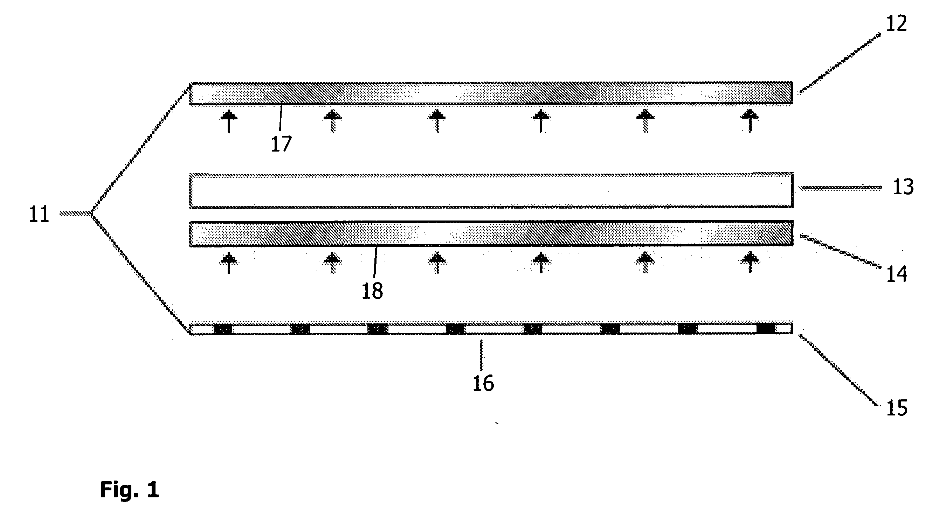

Fig. 1 demonstrates different layers of an information carrier card according to the present invention.

### Detailed Description of the Invention

According to the present invention, an information carrier card (11) comprising a plurality of layers, namely two polycarbonate-based layers (12, 14) along with a clear PVC (15) and an opaque PVC layer (13) are provided. The outer face (16) of said clear PVC overlay (15) is equipped with a magnetic stripe. The two sets of arrows in Fig. 1 indicate the faces (17, 18) of said two polycarbonate-based layers (12, 14) on which printing is applied.

The foremost layer (12) of the IC card according to the present invention is a LEXAN layer (registered trademark for General Electric Company), which is a thermoplastic polycarbonate condensation product of bisphenol-A and phosgene. Lexan® products used according to the present invention are clear transparent layers with smooth surface. The protective films on the materials are removed prior to working.

According to the present invention, a mirror image of designed visuals is printed, contrary to most cases in conventional production, on the back face (17) of said layer (12), therefore eliminating need for using an extra protective PVC layer on the surface which printing is applied. Polycarbonate film being a glass-like transparent material, when bonded to an extra protective overlay, tends to produce blurring effects in graphic details and in the mirror portion arranged according to the present invention. In other words, a clear PVC overlay on printed visuals would distort clarity of the mirror portion. Therefore printing a mirror image of card (11) front face visuals along with a surface portion to be provided with a mirror effect on the back face (17) of said clear polycarbonate layer (12) ensures that the latter also constitutes a protective overlay for the mirror image.

On the back face (17) of the polycarbonate layer (12) firstly a mirror image of the desired design in the form of graphics, written information, pictorial illustrations and other indicia are printed by a conventional offset lithography process. Due to the fact that details, advantages and different types of offset lithography technology are well-known and widely practiced in the art, they need not be furthermore mentioned herein.

Two separate polycarbonate layers (12, 14) being used to build the IC card stems from the fact that PVC and polycarbonate are simply different in terms of chemical properties and symmetrically arranged two polycarbonate layers (12, 14) ensure that the IC card does not bend when subject to lamination process. Therefore two polycarbonate layers (12, 14) of 200 µm are arranged such that an opaque PVC layer of 300 µm is placed in between the two and the layers (12, 13, 14 and 15) all together maintain a straight alignment when subject to lamination.

A final printing stage on the back face (17) of the polycarbonate layer (12) is carried out so as to cover surface portions that were not printed by offset lithography. Those are the portions that basically form the single-color ground outside the areas with graphics, written information, pictorial illustrations and other indicia. The remaining ground is printed by silk-screening, and preferably in silver or gold. Those two as background colors are said to simply have the function of highlighting foreground objects.

The printing sequence as explained for said back face (17) of the foremost polycarbonate layer (12) is slightly different for said intermediate polycarbonate layer (14) in that foreground objects are printed first, prior to printing background color. Also, a real image instead of a mirror image is printed since the back face (18) of said intermediate polycarbonate layer (14) directly structures the rear face of the information carrier card (11).

Background printing is carried out by silk-screening and foreground objects are printed either by offset lithography or silk-screening. The fact that foreground objects are printed before background color on the back face (17) of the foremost polycarbonate layer (12) is simply to highlight foreground objects in mirror image printing. Therefore printing sequence is reversed in real image printing on the back face (18) of said intermediate polycarbonate layer (14).

The surface portion on the rear face (17) of said polycarbonate layer (12) set to obtain a mirror effect area that was left blank during silk-screening and offset printing processes can then be printed. This is achieved by silk-screen printing and by way using a solvent based ink, namely Mirror Ink M1, a trademark of Pröll KG. The mirror ink is directly applied to clear polycarbonate surface. Mirror Ink M1® is a solvent-based metallic ink for creating mirror-like or surface like chrome effects on clear transparent PC (Polycarbonate), PMMA (Poly(methyl methacrylate), rigid PVC (Polyvinyl chloride) and pre-treated PET (polyethylene terephthalate) films, when printed on the reverse side of the materials (back surface print).

As is well-known to the person skilled in the art, there are a set of variables involved in the silk-screen process. One of those is the diameter of each dot formed in the silk screen and another one is number of dots per unit area. A bigger dot silk screen will generally produce a thicker layer of ink. According to the present invention, it is found that number of dots set to 10000 per square centimeter is required for attaining mirror effect.

Mirror ink applied surface portion is then left to drying for a period of twenty four hours. Upon drying, mirror effect portions are this time screen printed by black UV ink, which is critical in both providing protection against scratching and especially in enhancing mirror effect in the manner to eliminate any light permeable surface portions. The final product is then cured in UV light. It is worthy of note that black UV ink is still applied on the mirror region on the rear face (17) of the polycarbonate-based layer (12), due to which an even more improved mirror effect is achieved.

The opaque PVC layer (13) placed in between two polycarbonate-based layers (12, 14) is primarily serving to the purpose of building an IC card of standard thickness of 800 µm. Another function of this latter is to provide an opaque physical barrier between polycarbonate-based layers (12, 14) in terms of obstructing the passage of light and therefore ensuring clarity of the IC card front and rear faces.

The layers printed as is explained above are then joined for hot and cold press laminating. Prior to this however, a chemical preparation is applied on said opaque PVC layer (13) to join the same with the adjacent polycarbonate layers (12, 14).

Lamination here typically refers to sandwiching different layers and sealing them with heat and pressure.

Hot press laminating is carried out at a temperature of 110 C° and pressure of 90 bars for 20 minutes. Obtained samples are then automatically subjected to cold press laminating at a temperature of 20 C° and pressure of 110 bars for 20 minutes.
It is worthy of note that surface brilliance of steel boards used in lamination process might also be of importance in determining the degree of mirror effect. Therefore, steel sheets that are lacking surface brilliance are avoided during lamination process since those are to affect final reflectivity of the mirror portion.

## Claims

1. An information carrier card (11), particularly for carrying identity and accounting information of card holder, comprising at least one polycarbonate-based smooth-surface clear transparent layer (12) forming front face of said card (11)
**characterized in that**
the rear face (17) of said transparent layer (12) comprises a surface portion which is printed by a solvent-based metallic ink through silk-screening whereby said surface portion shows mirror characteristic.

2. An information carrier card as in Claim 1 wherein number of dots formed in the silk screen is set to have from 8.000 to 12.000 dots, and preferably 10.000 dots, per square centimeter.

3. An information carrier card as in Claim 2 wherein said polycarbonate-based smooth-surface clear transparent layer (12) is a thermoplastic polycarbonate condensation product of bisphenol - A and phosgene.

4. An information carrier card as in Claim 3 wherein the rear face (17) of said polycarbonate-based smooth-surface clear transparent layer (12) is bonded to an opaque PVC layer (13) obstructing the passage of light to said polycarbonate-based layer (12).

5. An information carrier card as in Claim 2, 3 or 4 wherein said mirror ink applied surface portion is screen printed by black UV ink.

6. An information carrier card as in Claim 5 wherein said opaque PVC layer (13) is symmetrically placed in between two identical polycarbonate-based layers (12, 14) whereby said layers (12, 14) ensure that the IC (information carrier) card maintain a straight alignment when subject to lamination process.

7. An information carrier card as in Claim 6 wherein said polycarbonate-based smooth-surface clear transparent layer (14) is a thermoplastic polycarbonate condensation product of bisphenol - A and phosgene.

8. An information carrier card as in Claim 6 and 7 wherein (a) a mirror image of desired design is printed by offset lithography process on said rear face (17) of the polycarbonate-based smooth-surface clear transparent layer (12) and (B) surface portions outside areas with graphics, written information, pictorial illustrations and other indicia are printed by silk-screening in a single color on said rear face (17) of the polycarbonate-based smooth-surface clear transparent layer (12).

9. An information carrier card as in Claim 6 and 7 wherein surface portions outside areas with graphics, written information, pictorial illustrations and other indicia are printed by silk-screening in a single color on said rear face (18) of the polycarbonate-based smooth-surface clear transparent layer (14) and a real image of the desired design is printed by offset lithography process on said rear face (15) of the polycarbonate-based smooth-surface clear transparent layer (14).

10. A method for producing an IC card having a surface portion with a mirror effect surface characteristic comprising the steps of;
a) printing a mirror image of desired design by offset lithography on the back face (17) of a polycarbonate-based smooth-surface clear transparent layer (12),
b) printing surface portions outside areas with graphics, written information, pictorial illustrations and other indicia by silk-screening in single-color on the same face (17).
c) applying a solvent-based metallic ink by silk-screening surface portion adapted to show a mirror surface characteristic,
d) applying a black UV ink by silk-screening to said surface portion adapted to show a mirror surface characteristic,
e) printing surface portions outside areas with graphics, written information, pictorial illustrations and other indicia by silk-screening in single-color on the back face (18) of a polycarbonate-based smooth-surface clear transparent layer (14),
f) printing a real image of desired design by offset lithography on the same back face (18),
g) applying magnetic tapes to a clear PVC (15) overlay,
h) applying a PVC bonding chemical preparation to an opaque PVC layer (13).
i) assembling all layers so as to set said opaque PVC layer (13) in between said polycarbonate-based smooth-surface clear transparent layers (12, 14) and said clear PVC overlay (15) adjacent to said back face (18) of said polycarbonate-based smooth-surface clear transparent layer (14),
j) conducting lamination and punching processes.

11. A method for producing an IC card having a surface portion with a mirror effect surface characteristic as in claim 10 wherein the step of carrying out mounting and conducting lamination process further comprises the steps of;
a) conducting hot press laminating at a temperature of 110°C and pressure of 90 bars for 20 minutes,
b) conducting cold press laminating at a temperature of 20°C and pressure of 110 bars for 20 minutes.

## Patentansprüche

1. Informationsträgerkarte (11), besonders zum Speichern von Identitäts- und Abrechnungsinformationen des Karteninhabers, die mindestens eine glatte klare transparente Schicht (12) auf Polycarbonatbasis umfasst, welche die Vorderseite der Karte (11) bildet,
**dadurch gekennzeichnet, dass**
die Rückseite (17) der transparenten Schicht (12) einen Oberflächenteil umfasst, der mittels Siebdruck mit einer lösungsmittelhaltigen Metallfarbe mittels Siebdruck bedruckt ist, wodurch der Oberflächenteil Spiegeleigenschaften aufweist.

2. Informationsträgerkarte nach Anspruch 1, wobei die Zahl der Punkte, die im Seidensieb gebildet sind, 8.000 bis 12.000, vorzugsweise 10.000, pro Quadratzentimeter beträgt.

3. Informationsträgerkarte nach Anspruch 2, wobei die glatte klare transparente Schicht (12) auf Polycarbonatbasis ein thermoplastisches Polycarbonat-Kondensationsprodukt aus Bisphenol-A und Phosgen ist.

4. Informationsträgerkarte nach Anspruch 3, wobei die Rückseite (17) der glatten klaren transparenten Schicht (12) auf Polycarbonatbasis an eine undurchsichtige PVC-Schicht (13) gebunden ist, die den Durchgang von Licht zur Schicht (12) auf Polycarbonatbasis versperrt.

5. Informationsträgerkarte nach Anspruch 2, 3 oder 4, wobei der Oberflächenteil mit aufgetragener Spiegelfarbe im Siebdruckverfahren mit schwarzer UV-Farbe hergestellt ist.

6. Informationsträgerkarte nach Anspruch 5, wobei die undurchsichtige PVC-Schicht (13) symmetrisch zwischen zwei identischen Schichten (12, 14) auf Polycarbonatbasis angeordnet ist, wodurch die Schichten (12, 14) sicherstellen, dass die Informationsträgerkarte eine gerade Ausrichtung beibehält, wenn sie einem Laminierungsprozess unterzogen ist.

7. Informationsträgerkarte nach Anspruch 6, wobei die glatte klare transparente Schicht (14) auf Polycarbonatbasis ein thermoplastisches Polycarbonat-Kondensationsprodukt aus Bisphenol-A und Phosgen ist.

8. Informationsträgerkarte nach Anspruch 6 und 7, wobei (a) ein Spiegelbild gewünschter Ausführung durch einen Offset-Lithographieprozess auf der Rückseite (17) der glatten klaren transparenten Schicht (12) auf Polycarbonatbasis gedruckt ist, und b) äußere Oberflächenteile mit Grafik, schriftlichen Informationen, bildlichen Darstellungen und anderen Identifizierungsangaben mittels Siebdruck in einer einzigen Farbe auf der Rückseite (17) der glatten klaren transparenten Schicht (12) auf Polycarbonatbasis aufgedruckt sind.

9. Informationsträgerkarte nach Anspruch 6 oder 7, wobei die äußeren Oberflächenteile mit Grafik, schriftlichen Informationen, bildlichen Darstellungen und anderen Identifizierungsangaben mittels Siebdruck in einer einzigen Farbe auf der Rückseite (18) der glatten klaren transparenten Schicht (14) auf Polycarbonatbasis gedruckt sind und ein echtes Bild gewünschter Ausführung durch einen Offset-Lithographieprozess auf der Rückseite (15) der glatten klaren transparenten Schicht (14) auf Polycarbonatbasis gedruckt ist.

10. Verfahren zum Herstellen einer Informationsträgerkarte, die einen Oberflächenteil mit einem Spiegeleffekt hat, umfassend die Schritte:
a) Drucken eines Spiegelbildes gewünschter Ausführung mittels Offset-Lithographie auf der Rückseite (17) einer glatten klaren transparenten Schicht (12) auf Polycarbonatbasis,
b) Bedrucken von äußeren Oberflächenteilen mit Grafik, schriftlichen Informationen, bildlichen Darstellungen und anderen Identifizierungsangaben mittels Siebdruck in einer einzigen Farbe auf derselben Seite (17),
c) Auftragen einer lösungsmittelhaltigen Metallfarbe mittels Siebdruck auf den Oberflächenteil, der Spiegelflächeneigenschaften zeigen soll,
d) Auftragen einer schwarzen UV-Farbe mittels Siebdruck auf den Oberflächenteil, der Spiegelflächeneigenschaften zeigen soll,
e) Bedrucken von äußeren Oberflächenteilen mit Grafik, schriftlichen Informationen, bildlichen Darstellungen und anderen Identifizierungsangaben mittels Siebdruck in einer einzigen Farbe auf der Rückseite (18) der glatten klaren transparenten Schicht (14) auf Polycarbonatbasis,
f) Drucken eines echten Bildes gewünschter Ausführung mittels Offset-Lithographie auf derselben Rückseite (18),
g) Aufbringen von Magnetstreifen auf eine klare PVC-Deckschicht (15),
h) Auftragen einer chemischen PVC-Bindemittelpräparation auf eine undurchsichtige PVC-Schicht (13),
i) Montage aller Schichten, derart dass die undurchsichtige PVC-Schicht (13) zwischen die glatten klaren transparenten Schichten (12, 14) auf Polycarbonatbasis und die klare PVC-Deckschicht (15) angrenzend an die Rückseite (18) der glatten klaren transparenten Schicht (14) auf Polycarbonatbasis angeordnet wird,
j) Ausführen von Laminierungs- und Stanzprozessen.

11. Verfahren zum Herstellen einer Informationsträgerkarte, die einen Oberflächenteil mit einem Spiegeleffekt hat, nach Anspruch 10, wobei der Schritt des Ausführens von Montage- und des Ausführens von Laminierungsprozessen ferner folgende Schritte umfasst:
a) Ausführen des Heißpresslaminierens bei einer Temperatur von 110 °C und einem Druck von 90 bar über einen Zeitraum von 20 Minuten,
b) Ausführen des Kaltpresslaminierens bei einer Temperatur von 20 °C und einem Druck von 110 bar über einen Zeitraum von 20 Minuten.

## Revendications

1. Carte formant support d'information (11), en particulier pour porter l'identité et les informations de compte d'un porteur de carte, comprenant au moins une couche transparente claire à surface lisse à base de polycarbonate (12) formant la face avant de ladite carte (11), **caractérisée en ce que**
la face arrière (17) de ladite couche transparente (12) comprend une partie de surface qui est imprimée au moyen d'une encre métallique à base de solvant par sérigraphie de sorte que ladite partie de surface présente une caractéristique de miroir.

2. Carte formant support d'information selon la revendication 1, dans laquelle le nombre de points formés dans l'écran de sérigraphie est de 8000 à 12 000 points, et de préférence de 10 000 points par centimètre carré.

3. Carte formant support d'information selon la revendication 2, dans laquelle ladite couche transparente claire à surface lisse à base de polycarbonate (12) est un polycarbonate thermoplastique qui est le produit de condensation de bisphénol-A et de phosgène.

4. Carte formant support d'information selon la revendication 3, dans laquelle la face arrière (17) de ladite couche transparente claire à surface lisse à base de polycarbonate (12) est liée à une couche en PVC opaque (13) pour bloquer le passage de la lumière vers ladite couche à base de polycarbonate (12).

5. Carte formant support d'information selon la revendication 2, 3 ou 4, dans laquelle ladite partie de surface appliquée avec encre à effet miroir est sérigraphiée au moyen d'une encre UV noire.

6. Carte formant support d'information selon la revendication 5, dans laquelle ladite couche en PVC opaque (13) est située de façon symétrique entre deux couches identiques à base de polycarbonate (12, 14) de sorte que lesdites couches (12, 14) assurent un alignement droit de la carte à puce (support d'information) lorsqu'elle est soumise au procédé de stratification.

7. Carte formant support d'information selon la revendication 6, dans laquelle ladite couche transparente claire à surface lisse à base de polycarbonate (14) est une polycarbonate thermoplastique qui est le produit de condensation de bisphénol-A et de phosgène.

8. Carte formant support d'information selon la revendication 6 et 7, dans laquelle (a) une image miroir d'un motif recherché est imprimé par un procédé de lithographie offset sur ladite face arrière (17) de la couche transparente claire à surface lisse à base de polycarbonate (12) et (b) des parties de surface dans des zones externes sont imprimées avec des graphismes, des écritures, des illustrations ainsi que d'autres signes par sérigraphie d'une seule couleur sur ladite face arrière (17) de la couche transparente claire à surface lisse à base de polycarbonate (12).

9. Carte formant support d'information selon la revendication 6 et 7, dans laquelle des parties de surface de zones externes sont imprimées avec des graphismes, des écritures, des illustrations et d'autres signes par sérigraphie d'une seule couleur sur ladite face arrière (18) de la couche transparente claire à surface lisse à base de polycarbonate (14) et une image réelle du motif recherché est imprimée par un procédé de lithographie offset sur ladite face arrière (15) de la couche transparente claire à surface lisse à base de polycarbonate (14).

10. Procédé de fabrication d'une carte à puce présentant une partie de surface avec une caractéristique de surface à effet miroir comprenant les étapes consistant à :
a) imprimer une image miroir du motif recherché par lithographie offset sur la face arrière (17) d'une couche transparente claire à surface lisse à base de polycarbonate (12),
b) imprimer des parties de surface de zones externes avec des graphismes, des écritures, des illustrations et d'autres signes par sérigraphie dans une seule couleur sur la même face (17),
c) appliquer une encre métallique à base de solvant par sérigraphie d'une partie de surface adaptée pour présenter une caractéristique de surface à effet miroir,
d) appliquer une encre UV noir par sérigraphie à ladite partie de surface adaptée pour présenter une caractéristique de surface à effet miroir,
e) imprimer des parties de surface de zones externes avec des graphismes, des écritures, des illustrations et d'autres signes par sérigraphie dans une seule couleur sur la surface arrière (18) d'une couche transparente claire à surface lisse à base de polycarbonate (14),
f) imprimer une image réelle d'un motif recherché par lithographie offset sur la même face arrière (18),
g) appliquer des bandes magnétiques à un support de recouvrement (15) en PVC transparent,
h) appliquer une préparation chimique de liaison de PVC a une couche PVC opaque (13),
i) assembler toutes les couches afin de situer ladite couche PVC opaque (13) entre lesdites couches transparentes claires à surface lisse à base de polycarbonate (12,14) et ledit support de recouvrement (15) en PVC clair adjacent à ladite face arrière (18) de ladite couche transparente claire à surface lisse à base de polycarbonate (14),
j) effectuer des procédés de stratification et de découpage.

11. Procédé de fabrication d'une carte à puce présentant une partie de surface avec une caractéristique de surface à effet miroir selon la revendication 10, dans lequel l'étape consistant à effectuer l'assemblage et la stratification comprend en outre les étapes consistant à :
a) effectuer une stratification à chaud à une température de 110°C et une pression de 90 bars pendant 20 minutes,
b) réaliser une stratification à froid à une température de 20°C et une pression de 110 bars pendant 20 minutes.
